# FASCICULE DE BREVET EUROPEEN

(11) **EP 0 735 088 B1**
(45) Date de publication et mention de la délivrance du brevet: **13.01.1999**
(21) Numéro de dépôt: 96103827.0
(22) Date de dépôt: 12.03.1996
(51) Int. Cl.: C08L 9/04, B60C 1/00, C08L 21/00, C08K 3/36

(54) **Composition de caoutchouc destinée à la fabrication d'enveloppes de pneumatiques à base de silices précipitées "dopées" à l'aluminium**
Für Laufflächen geeignete Gummimischung enthaltend mit Aluminium dotiertes Fallungssilica
Rubber composition suitable for treads containing aluminium doped precipitated silica

(30) Priorité: 29.03.1995 FR 9504077
(43) Date de publication de la demande: 02.10.1996
(73) Titulaire: COMPAGNIE GENERALE DES ETABLISSEMENTS MICHELIN - MICHELIN & CIE, 63040 Clermont-Ferrand Cédex (FR)
(72) Inventeur: Vanel, Robert, 63000 Clermont-Ferrand (FR)
(74) Mandataire: Hiebel, Robert

(56) Documents cités:
- EP-A- 0 110 762
- EP-A- 0 501 227
- EP-A- 0 631 982

## Description

La présente invention concerne de nouvelles compositions de caoutchouc destinées à la fabrication d'enveloppes de pneumatiques à base de silices précipitées « dopées » à l'aluminium.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que par exemple des sous-couches, des gommes de calandrage ou de flancs ou des bandes de roulement et obtenir des pneumatiques aux propriétés améliorées, notamment possédant une résistance au roulement réduite.

Pour atteindre un tel objectif de nombreuses solutions ont été proposées consistant notamment à modifier entre autres la nature des polymères et copolymères diéniques en fin de polymérisation au moyen d'agents de couplage ou d'étoilage ou de fonctionnalisation. Toutes ces solutions se sont essentiellement concentrées sur l'utilisation des polymères modifiés avec du noir de carbone comme charge renforçante dans le but d'obtenir une bonne interaction entre le polymère modifié et le noir de carbone. On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec l'élastomère et à se désagréger ou se désagglomérer, et se disperser de façon homogène dans l'élastomère. L'usage de charges blanches renforçantes, et de silice notamment, s'est révélé inapproprié en raison du faible niveau de certaines propriétés de telles compositions et par voie de conséquence de certaines propriétés des pneumatiques mettant en oeuvre ces compositions.

De plus, pour des raisons d'affinités réciproques, les particules de silice ont une fâcheuse tendance, dans la matrice élastomère, à s'agglomérer entre elles. Ces interactions silice/silice ont pour conséquence néfaste de limiter les propriétés de renforcement à un niveau sensiblement inférieur à celui qu'il serait théoriquement possible d'atteindre si toutes les interactions silice/élastomère susceptibles d'être créées pendant l'opération de mélange, étaient effectivement obtenues.

De surcroît, l'usage de la silice soulève des difficultés de mise en oeuvre dues aux interactions silice/silice qui tendent à l'état cru à augmenter la consistance des compositions caoutchouteuses, en tout cas à rendre la mise en oeuvre plus difficile que la mise en oeuvre du noir de carbone.

L'intérêt pour les compositions renforcées à la silice a été relancé récemment avec la publication de la demande de brevet européen EP-A-0 501 227 qui divulgue une composition de caoutchouc vulcanisable au soufre obtenue par travail thermomécanique d'un copolymère de diène conjugué et d'un composé vinyle aromatique préparé par polymérisation en solution avec 30 à 150 parties en poids pour 100 parties en poids d'élastomère d'une silice précipitée particulière. L'utilisation d'une telle silice a certes réduit les difficultés de mise en oeuvre des mélanges la contenant, à titre majoritaire ou non, à titre de charge renforçante mais la mise en oeuvre de telles compositions caoutchouteuses reste néanmoins plus difficile que la mise en oeuvre du noir de carbone.

Il est connu de l'homme de l'art qu'il est nécessaire d'utiliser un agent de couplage qui réagit avec la silice pour créer de bonnes interactions entre la surface de la silice et l'élastomère et un véritable réseau entre les chaînes élastomères tout en facilitant la dispersion de la silice et les compositions décrites dans la demande de brevet européen EP-A-0 501 227 sont également soumises à cette nécessité. Cet agent de couplage est fort onéreux et doit être utilisé en une quantité relativement importante. On a depuis fort longtemps recherché le moyen de pouvoir diminuer dans les compositions de caoutchouc renforcées à la silice la quantité d'agent de couplage nécessaire sans dégrader les propriétés des compositions.

La présente invention a pour but d'une part d'améliorer la mise en oeuvre des compositions de caoutchoucs diéniques destinées à la fabrication d'enveloppes de pneumatiques et, d'autre part, de réduire la quantité d'agent de couplage nécessaire sans dégrader les propriétés de telles compositions.

La demanderesse vient de découvrir de manière surprenante que chacun des deux problèmes ci-dessus pouvait être résolu par l'emploi dans des compositions de caoutchoucs diéniques d'une silice « dopée » aluminium, à titre de charge renforçante.

Par silice « dopée » aluminium, on entend une silice possédant de l'aluminium dans la maille de ses couches périphériques et/ou fixées à la surface de la silice.

La présente invention a pour objet une composition de caoutchouc vulcanisable au soufre et destinée à la fabrication d'enveloppes de pneumatiques, à base d'au moins un polymère diénique, caractérisée en ce qu'elle renferme à titre de charge renforçante une silice précipitée renfermant une teneur en aluminium d'au moins 0,35 % en poids par rapport au poids de silice.

La présente invention a également pour objet des constituants semi-finis utilisables dans la fabrication de pneumatiques, notamment des bandes de roulement, ainsi que des pneumatiques possédant une résistance au roulement améliorée obtenus par la mise en oeuvre d'une composition de caoutchouc selon l'invention renfermant de la silice « dopée » aluminium à titre de charge renforçante.

La présente invention a également pour objet un procédé pour améliorer les propriétés hystérétiques de compositions de caoutchoucs diéniques destinées à la fabrication d'enveloppes de pneumatiques et de produits semi-finis pour enveloppes de pneumatiques.

La présente invention a enfin pour objet un procédé permettant de réduire la quantité d'agent de couplage nécessaire par rapport au poids de silice mise en oeuvre dans une composition de caoutchouc diénique destinée à la fabrication d'enveloppes de pneumatiques et de produits semi-finis pour enveloppes de pneumatiques.

A titre de silice « dopée » aluminium susceptible d'être mise en oeuvre dans l'invention conviennent toutes les silices précipitées connues de l'homme de l'art présentant une surface BET ≤ à 450 m²/g, une surface spécifique CTAB ≤ à 450 m²/g, même si cette amélioration est plus prononcée avec une silice précipitée hautement dispersible.

Par silice hautement dispersible, on entend toute silice ayant une aptitude à la désagglomération et à la dispersion dans une matrice polymérique très importante observable par microscopie électronique ou optique, sur coupes fines. La dispersibilité de la silice est également appréciée au moyen d'un test d'aptitude à la désagglomération aux ultrasons suivi d'une mesure, par diffraction sur un granulomètre, de la taille des particules de silice pour déterminer le diamètre médian (D50) des particules et le facteur de désagglomération (Fd) après désagglomération comme décrit dans la demande de brevet EP-A-0 520 862 dont le contenu est incorporé ici ou dans l'article paru dans la revue Rubber World, juin 1994, pages 20-24, intitulé « Dispersibility measurements of prec. silicas ».

Comme exemples non limitatifs de telles silices hautement dispersibles préférentielles on peut citer celles ayant une surface CTAB égale ou inférieure à 450 m²/g et particulièrement celles décrites dans les demandes de brevet européen EP-A-0 157 703 et EP-A-0 520 862, dont le contenu est incorporé ici, ou la silice Perkasil KS 430 de la société Akzo, la silice Zeosil 1165 MP de la Société Rhône-Poulenc, la silice Hi-Sil 2000 de la Société PPG.

Toutefois, à titre plus préférentiel, conviennent les silices ayant :
- une surface spécifique CTAB comprise entre 140 et 200 m²/g, de préférence entre 145 et 180 m²/g,
- une surface spécifique BET comprise entre 140 et 200 m²/g, de préférence entre 150 et 190 m²/g,
- une prise d'huile DOP inférieure à 300 ml/100 g, de préférence comprise entre 200 et 295 ml/100 g,
- un diamètre médian (⌀₅₀), après désagglomération aux ultrasons, égal ou inférieur à 3 µm, de préférence inférieur à 2,8 µm, par exemple inférieur à 2,5 µm
- un facteur de désagglomération aux ultrasons (F_{D}) supérieur à 10 ml, de préférence supérieur à 11 ml, et plus préférentiellement ≥ 21 ml
- une teneur en aluminium d'au moins 0,35 % en poids par rapport au poids de la silice, de préférence 0,45 % en poids au moins et pouvant aller jusqu'à 3 % en poids par rapport au poids de la silice, et plus préférentiellement une teneur en aluminium comprise entre 0,50 et 1,50 % en poids ; cette teneur peut être notamment comprise entre 0,75 et 1,40 % en poids,
- un rapport spécifique BET/surface spécifique CTAB ≥ 1,0 et ≤ 1,2.

Lorsque la teneur en aluminium dépasse 3 % en poids, on observe une dénaturation de la surface de la silice, ce qui réduit l'intérêt d'utiliser une telle silice comme charge renforçante. Lorsque la teneur en aluminium est inférieure à 0,35 % en poids, les propriétés des compositions de caoutchouc diénique sont très proches de celles obtenues avec de la silice précipitée selon l'art antérieur c'est-à-dire non « dopée » aluminium.

Bien entendu par silice, on entend également des coupages de différentes silices. La silice peut être utilisée seule ou en présence d'autres charges blanches. La surface spécifique CTAB est déterminée selon la méthode NFT 45007 de novembre 1987. La surface spécifique BET est déterminée selon la méthode de BRUNAUER, EMMET, TELLER décrite dans « The Journal of the American Chemical Society, vol. 80, page 309 (1938) » correspondant à la norme NFT 45007 de novembre 1987. La prise d'huile DOP est déterminée selon la norme NFT 30-022 (mars 1953) en mettant en oeuvre le dioctylphtalate.

Ces silices « dopées » à l'aluminium sont obtenues selon un procédé de préparation comprenant la réaction d'un silicate avec un agent acidifiant ce par quoi l'on obtient une suspension de silice précipitée, puis la séparation et le séchage de cette suspension, dans lequel on réalise la précipitation de la manière suivante :
(i) On forme un pied de cuve initial comportant un silicate et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(ii) on ajoute l'agent acidifiant audit pied de cuve jusqu'à l'obtention d'une valeur du pH du milieu réactionnel d'au moins environ 7,
(iii) on ajoute au milieu réactionnel simultanément de l'agent acidifiant et un silicate,
et dans lequel on sèche une suspension présentant un taux de matière sèche d'au plus 24 % en poids,
ledit procédé comprenant une des deux opérations (a) ou (b) suivantes :
(a) On ajoute, après l'étape (iii), au milieu réactionnel au moins un composé A de l'aluminium, puis un agent basique, ladite séparation comportant une filtration et un délitage du gâteau issu de cette filtration, ledit délitage étant effectué en présence d'au moins un composé B de l'aluminium,
(b) On ajoute, après l'étape (iii), au milieu réactionnel simultanément un silicate et au moins un composé A de l'aluminium et, lorsque ladite séparation comporte une filtration et un délitage du gâteau issu de cette filtration, le délitage est de préférence effectué en présence d'au moins un composé B de l'aluminium.

Le choix de l'agent acidifiant et du silicate se fait d'une manière bien connue en soi.

On peut rappeler que l'on utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration exprimée en silice comprise entre 40 et 330 g/l, par exemple entre 60 et 300 g/l, en particulier entre 60 et 250 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral SIO₂/NA₂O compris entre 2 et 4, par exemple entre 3,0 et 3,7.

La précipitation se fait d'une manière spécifique selon les étapes.

On forme tout d'abord un pied de cuve qui comprend du silicate ainsi qu'un électrolyte (étape (i)). La quantité de silicate présente dans le pied de cuve initial ne représente avantageusement qu'une partie de la quantité totale de silicate engagée dans la réaction.

Le terme électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalinoterreux, notamment le sel du métal de silicate de départ et de l'agent acidifiant, par exemple le sulfate de sodium dans le cas de la réaction d'un silicate de sodium avec l'acide sulfurique.

La concentration en électrolyte dans le pied de cuve initial est (supérieure à 0 g/l et) inférieure à 17 g/l, de préférence inférieure à 14 g/l.

La concentration en silicate dans le pied de cuve initial est (supérieure à 0 g/l et) inférieure à 100 g de SiO₂ par litre. De préférence, cette concentration est inférieure à 90 g/l, notamment à 85 g/l. Elle peut, dans certains cas, être inférieure à 80 g/l.

La deuxième étape consiste à ajouter l'agent acidifiant dans le pied de cuve de composition décrite plus haut (étape (ii)).

Cette addition qui entraîne une baisse corrélative du pH du milieu réactionnel se fait jusqu'à ce qu'on atteigne une valeur du pH d'au moins environ 7, généralement comprise entre 7 et 8.

Une fois qu'est atteinte la valeur souhaitée de pH, on procède alors à une addition simultanée (étape (iii)) d'agent acidifiant et de silicate.

Cette addition simultanée est de préférence réalisée de manière telle que la valeur du pH soit constamment égale (à +/- 0,1 près) à celle atteinte à l'issue de l'étape (ii).

Le procédé de préparation de silice « dopée » aluminium comprend une des deux opérations (a) ou (b) mentionnées précédemment, c'est-à-dire :
(a) on ajoute, après l'étape (iii), au milieu réactionnel au moins un composé A de l'aluminium, puis un agent basique, la séparation, mise en oeuvre dans le procédé, comportant une filtration et un délitage du gâteau issu de cette filtration, ledit délitage étant effectué en présence d'au moins un composé B de l'aluminium, ou
(b) on ajoute, après l'étape (iii), au milieu réactionnel simultanément un silicate et au moins un composé A de l'aluminium et, lorsque la séparation, mise en oeuvre dans le procédé, comporte une filtration et un délitage du gâteau issu de cette filtration, le délitage est de préférence effectué en présence d'au moins un composé B de l'aluminium.

Lorsque le procédé de préparation comprend l'opération (a), on effectue avantageusement, après avoir réalisé la précipitation selon les étapes (i), (ii) et (iii) précédemment décrites, les étapes successives suivantes :
(iv) on ajoute au milieu réactionnel (c'est-à-dire à la suspension ou bouillie réactionnelle obtenue) au moins un composé A de l'aluminium,
(v) on ajoute au milieu réactionnel un agent basique, de préférence jusqu'à l'obtention d'une valeur du pH du milieu réactionnel comprise entre 6,5 et 10, en particulier entre 7,2 et 8,6,
(vi) on ajoute au milieu réactionnel de l'agent acidifiant, de préférence jusqu'à l'obtention d'une valeur du pH du milieu réactionnel comprise entre 3 et 5, en particulier entre 3,4 et 4,5.

Il peut être alors avantageux d'effectuer, après l'addition simultanée de l'étape (iii), un mûrissement du milieu réactionnel, ce mûrissement pouvant par exemple durer de 1 à 60 minutes, en particulier de 3 à 30 minutes.

Dans cette première variante, il est souhaitable, entre l'étape (iii) et l'étape (iv), et notamment avant ledit mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, en particulier entre 4 et 6.

L'agent acidifiant utilisé lors de cette addition est généralement identique à celui employé lors des étapes (ii), (iii) et (vi) de la première variante du procédé de préparation selon l'invention.

Un mûrissement du milieu réactionnel est habituellement effectué entre l'étape (v) et l'étape (vi), par exemple pendant 2 à 60 minutes, en particulier pendant 5 à 45 minutes.

De même, un mûrissement du milieu réactionnel est le plus souvent effectué après l'étape (vi), par exemple pendant 2 à 60 minutes, en particulier pendant 5 à 30 minutes.

L'agent basique utilisé lors de l'étape (iv) peut être une solution d'ammoniaque ou, de préférence, une solution d'hydroxyde de sodium (ou soude).

Lorsque le procédé de préparation comprend l'opération (b), on effectue, après les étapes (i), (ii) et (iii) précédemment décrites, une étape (iv) qui consiste à ajouter au milieu réactionnel simultanément un silicate et au moins un composé A de l'aluminium.

Il peut être alors avantageux d'effectuer, après l'addition simultanée de l'étape (iv), un mûrissement du milieu réactionnel, ce mûrissement pouvant par exemple durer de 2 à 60 minutes, en particulier de 5 à 30 minutes.

Dans cette seconde variante, il est souhaitable, après l'étape (iv), et notamment après ce mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, en particulier entre 4 et 6.

L'agent acidifiant utilisé lors de cette addition est généralement identique à celui employé lors des étapes (ii) et (iii) de la seconde variante du procédé de préparation.

Un mûrissement du milieu réactionnel est habituellement effectué après cette addition d'agent acidifiant, par exemple pendant 1 à 60 minutes, en particulier pendant 3 à 30 minutes.

Le composé A de l'aluminium employé dans le procédé de préparation est en général un sel organique ou inorganique de l'aluminium.

A titre d'exemples de sel organique, on peut citer notamment les sels d'acides carboxyliques ou polycarboxyliques, comme les sels d'acide acétique, citrique, tartrique ou oxalique.

A titre d'exemples de sel inorganique, on peut citer notamment les halogénures et les oxyhalogénures (comme les chlorures, les oxychlorures), les nitrates, les phosphates, les sulfates et les oxysulfates.

Dans la pratique, le composé A de l'aluminium peut être utilisé sous la forme d'une solution, en général aqueuse.

De préférence, on emploie à titre de composé A de l'aluminium un sulfate d'aluminium.

La température du milieu réactionnel est généralement comprise entre 70 et 98 °C.

Selon une variante du procédé, la réaction est effectuée à une température constante comprise entre 75 et 96 °C.

Selon une autre variante (préférée) du procédé, la température de fin de réaction est plus élevée que la température de début de réaction : ainsi, on maintient la température au début de la réaction de préférence entre 70 et 96 °C, puis on augmente la température en quelques minutes, de préférence jusqu'à une valeur comprise entre 80 et 98 °C, valeur à laquelle elle est maintenue jusqu'à la fin de la réaction ; les opérations (a) et (b) sont ainsi habituellement effectuées à cette valeur constante de température.

On obtient, à l'issue des étapes qui viennent d'être décrites, une bouillie de silice qui est ensuite séparée (séparation liquide-solide).

Dans la première variante du procédé de préparation (c'est-à-dire lorsque celui-ci comprend l'opération (a)), cette séparation comporte une filtration (suivie d'un lavage si nécessaire) et un délitage, ledit délitage étant effectué en présence d'au moins un composé B de l'aluminium et, de préférence, en présence d'un agent acidifiant tel que décrit précédemment (dans ce dernier cas, le composé B de l'aluminium et l'agent acidifiant sont avantageusement ajoutés de manière simultanée).

L'opération de délitage, qui peut être réalisée par exemple par passage du gâteau de filtration dans un broyeur de type colloïdal ou à bille, permet notamment d'abaisser la viscosité de la suspension à sécher ultérieurement.

Dans la seconde variante du procédé de préparation de silice dopée (c'est-à-dire lorsque celui-ci comprend l'opération (b)), la séparation comporte aussi, en général, une filtration (suivie d'un lavage si nécessaire) et un délitage, ledit délitage étant de préférence effectué en présence d'au moins un composé B de l'aluminium et, en général, en présence d'un agent acidifiant tel que décrit précédemment (dans ce dernier cas, le composé B de l'aluminium et l'agent acidifiant sont avantageusement ajoutés de manière simultanée).

Le composé B de l'aluminium est habituellement différent du composé A de l'aluminium mentionné précédemment et consiste, en général, en un aluminate de métal alcalin, notamment de potassium ou, de manière très préférée, de sodium.

De préférence, les quantités de composés A et B de l'aluminium utilisées dans le procédé de préparation de silice « dopée » sont telles que la silice précipitée préparée contient au moins 0,35 %, en particulier au moins 0,45 %, par exemple entre 0,50 et 1,50 %, voire entre 0,75 et 1,40 %, en poids d'aluminium par rapport au poids de silice.

La séparation mise en oeuvre dans le procédé de préparation de silice « dopée » aluminium comprend habituellement une filtration effectuée au moyen de toute méthode convenable, par exemple au moyen d'un filtre à bande, d'un filtre rotatif sous vide ou, de préférence, d'un filtre presse.

La suspension de silice précipitée ainsi récupérée (gâteau de filtration) est ensuite séchée.

Cette suspension doit présenter immédiatement avant son séchage un taux de matière sèche d'au plus 24 % en poids, de préférence d'au plus 22 % en poids.

Ce séchage peut se faire selon tout moyen connu en soi et de préférence le séchage se fait par atomisation.

Par polymères diéniques susceptibles d'être mis en oeuvre dans les compositions conformes à l'invention, on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinyle aromatique ayant de 8 à 20 atomes de carbone. A titre de diènes conjugués conviennent notamment le butadiène-1,3, le 2-méthyl-1,3-butadiène, les 2,3-di(alcoyle en C₁ à C₅)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, etc...

A titre de composés vinyle aromatique conviennent notamment le styrène, l'ortho-, meta, para-méthylstyrène, le mélange commercial "vinyle-toluène", le para-tertiobutylstyrène, les méthoxy-styrènes, les chloro-styrènes, le vinyle mésitylène, le divinyle benzène, le vinyle naphtalène, etc...

Les copolymères peuvent contenir entre 99 % et 20 % en poids d'unités diéniques et de 1 % à 80 % en poids d'unités vinyle aromatiques. Les polymères peuvent avoir toute microstructure qui est fonction des conditions de polymérisation utilisées, notamment de la présence ou non d'un agent modifiant et/ou randomisant et des quantités d'agent modifiant et/ou randomisant employées. Les polymères peuvent être à blocs, statistiques, séquencés, microséquencés, etc... et être préparés en dispersion ou en solution.

A titre préférentiel conviennent les polybutadiènes et en particulier ceux ayant une teneur en unités-1,2 comprise entre 4 % et 80 % et ceux ayant plus de 90 % de liaisons Cis-1,4, les polyisoprènes, les copolymères de butadiène-styrène et en particulier ceux ayant une teneur en styrène comprise entre 5% et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %, ceux ayant une teneur globale en composé aromatique comprise entre 5 % et 50 % et une température de transition vitreuse (Tg) comprise entre 0 °C et - 80 °C et particulièrement ceux ayant une teneur en styrène comprise entre 25 % et 30 % en poids, une teneur en liaisons vinyliques de la partie butadiénique comprise entre 55 % et 65 %, une teneur en liaisons trans-1,4 comprise entre 20 % et 25 % et une température de transition vitreuse comprise entre - 20 °C et - 30 °C.

Dans le cas de copolymères de butadiène-styrène-isoprène conviennent ceux ayant une teneur en styrène comprise entre 5 et 50 % et plus particulièrement comprise entre 10 % et 40 %, une teneur en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4% et 85%, une teneur en unités trans-1,4 de la partie butadiénique comprise entre 6 % et 80 %, une teneur en unités-1,2 plus 3,4 de la partie isoprénique comprise entre 5 % et 70 % et une teneur en unités trans-1,4 de la partie isoprénique comprise entre 10 % et 50 %.

Bien entendu, le polymère diénique peut être couplé et/ou étoilé ou encore fonctionnalisé avec un agent de couplage et/ou d'étoilage ou de fonctionnalisation. Le polymère diénique peut également être du caoutchouc naturel ou un coupage à base de caoutchouc naturel.

Les compositions conformes à l'invention contiennent outre un ou plusieurs polymères diénique et la silice, tout ou partie des autres constituants et additifs habituellement utilisés dans les mélanges de caoutchouc comme des plastifiants, pigments, anti-oxydants, du soufre, des accélérateurs de vulcanisation, des huiles d'extension, un ou des agents de couplage ou de liaison de silice, et/ou un ou des agents de recouvrement de la silice tels que des alcoxysilanes, polyols, amines, etc...

De manière imprévisible pour l'homme de l'art, il a été découvert que l'utilisation de silice « dopée » aluminium à titre de charge renforçante confère aux compositions de caoutchouc à base d'un polymère diénique synthétique et/ou naturel des propriétés de mise en oeuvre améliorées, notamment une extrudabilité ou une aptitude au travail sur boudineuse améliorée, ce qui rend ces compositions particulièrement utiles pour la fabrication de produits semi-finis utilisables comme constituants de pneumatiques, notamment des bandes de roulement, des sous-couches, des gommes de flancs, des gommes de calandrage.

Ainsi, l'invention a également pour objet un procédé pour améliorer les propriétés hystérétiques de compositions de caoutchoucs diéniques vulcanisables au soufre et destinées à la fabrication d'enveloppes de pneumatiques comprenant de la silice à titre de charge renforçante caractérisé, en ce qu'il consiste à renforcer lesdites compositions avec une silice précipitée possédant une teneur en aluminium ≥ à 0,35 % et ≤ à 3 % en poids par rapport au poids de la silice et à la mettre en oeuvre comme connu en soi.

De manière tout aussi imprévisible pour l'homme de l'art, il a été découvert que l'utilisation de silice « dopée » aluminium à titre de charge renforçante permet de réduire significativement le taux d'agent de couplage à utiliser dans des compositions de caoutchoucs à base de polymères diéniques synthétiques et/ou naturel comprenant une silice précipitée à titre de charge renforçante, par rapport au taux d'agent de couplage nécessaire avec les mêmes silices précipitées mais non dopées aluminium, sans pénaliser les propriétés à l'état vulcanisé des compositions. Compte tenu du coût élevé des agents de couplage, la composition selon l'invention permet une substantielle économie d'argent.

L'invention a également pour objet un procédé pour réduire la teneur en agent de couplage de compositions de caoutchoucs diéniques vulcanisables au soufre et destinées à la fabrication d'enveloppes de pneumatiques comprenant de la silice à titre de charge renforçante caractérisé en ce qu'il consiste à utiliser une silice précipitée possédant une teneur en aluminium ≥ à 0,35 % et ≤ à 3 % en poids par rapport au poids de la silice et à la mettre en oeuvre comme connu en soi.

Dans le cadre du procédé, on utilise les quantités respectives de silice « dopée » aluminium et d'agent de couplage telles que le rapport en poids de silice « dopée » sur agent de couplage soit ≥ à 4,5 et < à 8 et de préférence ≥ à 5,5 et ≤ à 6,7.

L'effet bénéfique maximal est obtenu lorsque la silice dopée aluminium constitue la totalité de la charge renforçante. Un effet bénéfique est également obtenu lorsque la silice « dopée » aluminium est utilisée à titre majoritaire ou encore lorsque la silice « dopée » aluminium est utilisée en coupage avec des silices précipitées de l'art antérieur, ou avec d'autres charges blanches ou encore avec du noir de carbone : comme noirs de carbone, conviennent tous les noirs de carbone, notamment tous les noirs commercialement disponibles ou conventionnellement utilisés dans les pneus et particulièrement dans les bandes de roulement des pneus. La quantité de noir de carbone présente peut varier dans de larges limites étant toutefois entendu que l'amélioration des propriétés sera d'autant plus importante que le taux de silice présent est élevé. La quantité de noir de carbone présente est préférentiellement égale ou inférieure à 33 % de la quantité de silice présente dans la composition.

La composition de caoutchouc conforme à l'invention est particulièrement adaptée pour la fabrication de bandes de roulement de pneumatiques destinés en particulier à équiper des véhicules de tourisme, des véhicules légers tous terrains 4x4, des camionnettes, des motos.

L'invention est illustrée à titre non limitatif par les exemples qui ne sauraient constituer une limitation de la portée de l'invention.

Dans les exemples, les propriétés des compositions sont évaluées comme suit :
- Viscosité Mooney ML (1+4) à 100 °C mesurée selon la norme ASTM D-1646
- Modules d'allongement à 300 % (MA 300), 100 % (MA100) : mesures effectuées selon la norme ISO 37
- Indices de cassage Scott : mesurés à 23 °C
   Force rupture (FR) en MPa
   Allongement à la rupture (AR) en %
- Pertes hystérétiques (PH) : mesurées par rebond à 23 °C et à 60°C selon la norme ISO R17667 et exprimées en %

### Exemple 1

Cet exemple a pour but de comparer deux compositions de caoutchouc diénique identiques à l'exception de la silice utilisée qui, dans le cas de l'essai 1, est une silice « dopée » aluminium et dans le cas de l'essai 2, qui est l'essai témoin, est une silice selon l'art antérieur, c'est-à-dire une silice hautement dispersible contenant une teneur en aluminium réduite obtenue selon le procédé décrit dans la demande de brevet européen EP-A-0.520.862 et une quantité d'agent de couplage qui, dans l'essai 1, est réduite par rapport à celle utilisée dans l'essai 2.

Les caractéristiques des constituants sont les suivantes :
- SBR solution : copolymère de butadiène-styrène préparé en solution selon le procédé décrit dans la demande de brevet français n° 2 295 972, ayant une teneur en styrène de 26 %, une teneur en liaisons vinyliques de 60 %, une teneur en liaisons trans-1,4 de 22 % et en liaisons Cis-1,4 de 18 %, une Tg de - 25 °C et soumis à un étoilage avec du diéthylène glycol selon le procédé décrit dans le brevet français 2 053 786.
- Le polybutadiène (PB) est un polybutadiène ayant 93 % de liaisons Cis-1,4 obtenu par le procédé décrit dans le brevet français n° 1 436 607.
- Antioxydant : N-(1,3-diméthylbutyl)-N'-phényl-p-phénylènediamine.
- Paraffine : mélange de cires macro et microcristallines.
- Sulfénamide : N-cyclohexyl-2-benzothiazyl-sulfénamide.
- Agent de couplage : mélange dans le rapport 1 : 1 de noir de carbone N 330 et d'organosilane polysulfuré commercialisé par Degussa sous la référence X 50S.
- Silice de l'essai 2 selon l'art antérieur : BET 152 m²/g ; CTAB : 150 m²/g ; D50 en microns 5 ; Fd 8 ml ; % d'aluminium total par rapport au poids de la silice 0,25, commercialisée par la Société Rhône Poulenc sous la dénomination commerciale Z1165.
- Silice « dopée » aluminium : BET 178 m²/g ; CTAB 149 m²/g ; D50 en microns 2,7 ; Fd 17 ml ; % d'aluminium total par rapport au poids de la silice 0,97.
- Huile aromatique d'extension.

La silice « dopée » aluminium est obtenue selon le procédé décrit ci-dessous :

Dans un réacteur en acier inoxydable muni d'un système d'agitation par hélices et d'un chauffage par double enveloppe, on introduit :
- 350 litres d'eau
- 7,5 kg de Na₂SO₄
- 580 litres de silicate de sodium aqueux, présentant un rapport pondéral SiO₂/Na₂O égal à 3,45 et une densité à 20 °C égale à 1,133.

La concentration en silicate exprimée en SiO₂ dans le pied de cuve initial est alors de 84 g/l. Le mélange est alors porté à une température de 82 °C tout en le maintenant sous agitation. On y introduit alors 390 litres d'acide sulfurique dilué de densité à 20 °C égale à 1,050 jusqu'à obtenir dans le milieu réactionnel une valeur de pH (mesurée à sa température) égale à 7,5. La température de ta réaction est de 82 °C pendant les 25 premières minutes ; elle est ensuite portée de 82 à 94 °C en 15 minutes environ, puis maintenue à 94 °C jusqu'à la fin de la réaction.

On introduit ensuite conjointement dans le milieu réactionnel 55 litres de silicate de sodium aqueux du type décrit ci-avant et 89 litres d'acide sulfurique, également du type décrit ci-avant, cette introduction simultanée d'acide et de silicate étant réalisée de manière telle que le pH du milieu réactionnel, pendant la période d'introduction, soit constamment égal à 7,5 ± 0,1.

On arrête ensuite l'introduction d'acide et on introduit conjointement dans le milieu réactionnel, pendant 24 minutes, 86 litres de silicate de sodium aqueux du type décrit ci-avant et 33 litres d'une solution de sulfate d'aluminium de densité à 20 °C égale à 1,2.

On arrête ensuite cette addition conjointe et on procède à un mûrissement du milieu réactionnel pendant 10 minutes à 94 °C.

Puis on introduit dans le milieu réactionnel, pendant 7 minutes, de l'acide sulfurique du type décrit ci-avant, de manière à amener le pH du milieu réactionnel à une valeur égale à 5,0. Après cette introduction d'acide, on maintient la bouillie réactionnelle obtenue pendant 5 minutes sous agitation.

La durée totale de la réaction est 109 minutes.

On obtient ainsi une bouillie de silice précipitée qui est filtrée et lavée au moyen d'un filtre presse.

Le gâteau obtenu est ensuite fluidifié par simple action mécanique. Après cette opération de délitage, ta bouillie résultante, de pH égal à 6,5 et de perte au feu égale à 78,3 % (donc un taux de matière sèche de 21,7 % en poids), est atomisée au moyen d'un atomiseur à buses.

La silice obtenue se présente sous forme de billes sensiblement sphériques.

Les compositions des essais 1 et 2 sont obtenues par mise en oeuvre par un travail thermo-mécanique en 2 étapes dans un mélangeur interne qui durent 5 et 4 minutes avec une vitesse moyenne des palettes de 45 tr/mn, jusqu'à atteindre une température maximale de tombée de 160 °C suivies d'une étape de finition effectuée à 65 °C, des constituants sous la formulation suivante dans laquelle toutes les parties sont exprimées en poids :

| **Composition** | **Essai 1** | **Essai 2** |
|---|---|---|
| SBR/PB | 75/25 | 75/25 |
| Silice | | 80 |
| Silice dopée | 80 | |
| Huile aromatique | 37,5 | 37,5 |
| Agent de couplage | 9,6 | 12,8 |
| Acide stéarique | 1,0 | 1,0 |
| Cire anti-ozone | 1,5 | 1,5 |
| Oxyde de zinc | 2,5 | 2,5 |
| Antioxydant | 2,0 | 2,0 |
| Soufre | 1,4 | 1,4 |
| Sulfénamide | 1,7 | 1,7 |
| Diphénylguanidine | 2,7 | 2,0 |

La vulcanisation est effectuée à 150 °C pendant 40 minutes.

On compare entre elles les propriétés de ces 2 compositions tant à l'état non vulcanisé qu'à l'état vulcanisé.

Les résultats sont consignés dans le tableau I.

**TABLEAU I**

| **Composition** | **Essai 1** | **Essai 2** |
|---|---|---|
| **Propriétés classiques de caoutchouterie** | | |
| Mooney | 105 | 110 |

| **Propriétés à l'état vulcanisé** | | |
|---|---|---|
| Dureté Shore A | 69,9 | 69,5 |
| MA100 | 2,04 | 1.94 |
| MA300 | 2,63 | 2,48 |
| MA300/MA100 | 1,29 | 1.28 |

| **Indices de cassage Scott à :** | | |
|---|---|---|
| 23°C FR | 19,7 | 20,3 |
| 23°C AR % | 500 | 526 |
| PH à 60°C* | 25,0 | 25,8 |

| | | |
|---|---|---|
| (*) la déformation pour cette perte hystérétique est de 34 %. | | |

On constate que la composition 1 conforme à l'invention mettant en oeuvre la silice « dopée » aluminium avec un taux réduit d'agent de couplage, en raison d'une meilleure dispersibilité de la silice dans l'élastomère conserve un niveau inférieur de viscosité Mooney, ce qui se traduit par une plus grande facilité de mise en oeuvre de la composition tant au niveau du travail thermo-mécanique de mastication qu'au niveau des opérations d'extrusion ou de calandrage, notamment lors de la fabrication de produits semi-finis. Cette composition possède également un indice d'interaction charge-élastomère amélioré comme en témoigne le rapport Module 300/Module 100, tout en conservant substantiellement le même niveau des propriétés mécaniques. Cette composition possède en outre, une amélioration de la perte hystérétique et par voie de conséquence est appropriée pour entrer dans la constitution notamment d'une bande de roulement de pneumatique susceptible de conduire à un pneumatique ayant une résistance au roulement réduite.

### Exemple 2

Dans cet exemple, on réalise 3 essais pour comparer 3 compositions. La composition mise en oeuvre dans l'essai 3, qui est conforme à l'invention, contient une silice « dopée » aluminium et une teneur réduite en agent de couplage. La composition mise en oeuvre dans l'essai 4 contient une silice selon l'art antérieur et une teneur en agent de couplage conventionnelle conforme à l'état de la technique antérieur, c'est-à-dire correspondant à un rapport en poids silice sur agent de couplage de 8/1. La composition mise en oeuvre dans l'essai 5 ne se différencie principalement de la composition de l'essai 4 que par une teneur réduite en agent de couplage et identique à celle utilisée dans l'essai 3, correspondant à un rapport en poids silice « dopée » sur agent de couplage de 6/1.

La formulation utilisée par ces 3 essais est la suivante :

| | **Essais 3 et 5** | **Essai 4** |
|---|---|---|
| SBR solution : 100 | | |
| Silice : 70 | | |
| Huile aromatique : 37,5 | | |
| Agent de couplage | 8,4 | 11,2 |
| Acide stéarique : 1,5 | | |
| Cire anti-ozone : 1,5 | | |
| Oxyde de zinc : 2,5 | | |
| Antioxydant : 1,9 | | |
| Soufre : | 1,44 | 1,10 |
| Sulfénamide | 2,60 | 2,0 |
| Diphénylguanidine : 1,50 | | |

Tous les constituants sont identiques à ceux utilisés dans l'exemple 1 à l'exception de la silice et la mise en oeuvre des constituants est effectuée de la même manière que celle décrite à l'exemple 1.

Dans l'essai 3 conforme à l'invention, on utilise une silice « dopée » aluminium ayant une surface spécifique CTAB de 151 m²/g, une surface spécifique BET de 169 m²/g, D50 de 2,7 microns, un Fd de 17 ml et un taux d'aluminium total de surface de 0,77 % et qui a été préparée selon le procédé décrit dans la description. Dans les essais 4 et 5, la silice est la même silice précipitée conforme à l'état de la technique antérieur que celle utilisée dans l'essai 2 de l'exemple 1.

La vulcanisation est effectuée à 150 °C pendant 40 minutes. On compare entre elles les propriétés de ces 2 compositions tant à l'état non vulcanisé qu'à l'état vulcanisé. Les résultats sont consignés dans le tableau II.

**TABLEAU II**

| **Composition** | **Essai 3** | **Essai 4** | **Essai 5** |
|---|---|---|---|
| **Propriétés classiques de caoutchouterie** | | | |
| Mooney | 75 | 73 | 81 |

| **Propriétés à l'état vulcanisé** | | | |
|---|---|---|---|
| Dureté Shore A | 65,7 | 65,6 | 65,2 |
| MA100 | 1,81 | 1,61 | 1,67 |
| MA300 | 2,16 | 1,88 | 1,91 |
| MA300/100 | 1,20 | 1,17 | 1,15 |

| **Indices de cassage Scott à :** | | | |
|---|---|---|---|
| FR à 23 °C | 21,8 | 21,7 | 22,1 |
| AR à 23 °C | 566 | 604 | 612 |
| PH à 23 °C | 41,1 | 43,9 | 43,3 |
| PH à 60 °C | 26,8 | 30,6 | 29,8 |

Les résultats montrent que la composition conforme à l'invention tout en ayant un taux réduit d'agent de couplage possède un niveau de viscosité proche de celle du témoin de l'essai 4 tandis que dans le cas de la composition témoin 5, la viscosité s'est accrue notablement, ce qui se traduit par un durcissement du mélange à cru et une mise en oeuvre plus difficile.

On constate également que les interactions élastomère-silice et les propriétés hystérétiques de la composition 3 conforme à l'invention sont nettement améliorées par rapport à celles exhibées par les compositions témoins 4 et 5 et ce bien que le taux d'agent de couplage soit réduit. Par ailleurs, toutes les autres propriétés sont substantiellement restées conservées.

### Exemple 3

Dans cet exemple, on compare les propriétés d'une composition conforme à l'invention mettant en oeuvre une silice « dopée » aluminium et ayant un taux en agent de couplage par rapport à la quantité de silice conventionnel et en conformité avec l'état de la technique (Essai 6) à celles d'une composition témoin mettant en oeuvre la même silice que celle utilisée dans l'essai 2 de l'exemple 1 (Essai 7).

La silice « dopée » aluminium utilisée dans l'essai 6 possède une surface spécifique CTAB 149 m²/g, une surface spécifique BET 149 m²/g, un D50 de 2,1 microns, un Fd de 36 ml et un taux d'aluminium total de surface de 0,85 % en poids par rapport au poids de la silice.

La formulation pour les 2 compositions est identique à celle de l'essai 4 de l'exemple 2 et effectuée de la même manière que celle décrite à l'exemple 1.

La vulcanisation est effectuée à 150 °C pendant 40 minutes.

Les résultats sont consignés dans le tableau III..

**TABLEAU III**

| **Composition** | **Essai 6** | **Essai 7** |
|---|---|---|
| **Propriétés classiques de caoutchouterie** | | |
| Mooney | 70 | 85 |

| **Propriétés à l'état vulcanisé** | | |
|---|---|---|
| Dureté Shore A | 66,2 | 68,0 |
| MA100 | 1,58 | 1,66 |
| MA300 | 3,61 | 3,50 |
| MA300/100 | 1,14 | 1,05 |

| **Indices de cassage Scott à :** | | |
|---|---|---|
| FR à 23 °C | 21,2 | 23 |
| AR à 23 °C | 696 | 757 |
| PH à 23 °C | 40,8 | 43,1 |
| PH à 60 °C | 27,5 | 29,7 |

Les résultats permettent de constater que la composition conforme à l'invention, lorsqu'elle possède un taux d'agent de couplage conforme à l'état de la technique possède des propriétés de mise en oeuvre et des propriétés hystérétiques nettement améliorées, de même qu'une meilleure interaction élastomère-silice. La composition conforme à l'invention est ainsi susceptible de permettre une fabrication facilitée et, par voie de conséquence, plus économique de produits semi-finis destinés à des pneumatiques, et de pneumatiques en ce sens que la mise en oeuvre de la composition se rapproche de celle mettant en oeuvre du noir de carbone. La composition conforme à l'invention de par ses excellentes propriétés hystérétiques est également appropriée à constituer des pneumatiques ayant une résistance au roulement réduite.

## Revendications

1. Composition de caoutchouc vulcanisable au soufre destinée à la fabrication d'enveloppes de pneumatiques, à base d'au moins un polymère diénique, caractérisée en ce qu'elle renferme à titre de charge renforçante une silice hautement dispersible renfermant une teneur en aluminium ≥ à 0,35 % et ≤ 3 % en poids par rapport au poids de la silice obtenue par précipitation de la manière suivante :
(i) on forme un pied de cuve initial comportant un silicate et un électrolyte, la concentration en silicate (exprimée en SiO₂) dans ledit pied de cuve initial étant inférieure à 100 g/l et la concentration en électrolyte dansledit pied de cuve initial étant inférieure à 17 g/l,
(ii) on ajoute l'agent acidifiant audit pied de cuve jusqu'à l'obtention d'une valeur du pH du milieu réactionnel d'au moins environ 7,
(iii) on ajoute au milieu réactionnel simultanément de l'agent acidifiant et un silicate,
et dans lequel on sèche une suspension présentant un taux de matière sèche d'au plus 24 % en poids, et :
soit (a) on ajoute, après l'étape (iii), au milieu réactionnel au moins un composé A de l'aluminium, puis un agent basique, ladite séparation comportant une filtration et un délitage du gâteau issu de cettefiltration, ledit délitage étant effectué en présence d'au moins un composé B de l'aluminium,
soit b) on ajoute, après l'étape (iii), au milieu réactionnel simultanément un silicate et au moins un composé A de l'aluminium et, lorsque ladite séparation comporte une filtration et un délitage du gâteau issu de cette filtration, le délitage est de préférence effectué en présence d'au moins un composé B de l'aluminium.

2. Composition selon la revendication 1, comprenant la réaction d'un silicate avec un agent acidifiant ce par quoi l'on obtient une suspension de silice précipitée, puis la séparation et le séchage de cette suspension, dans lequel :
- on réalise la précipitation de la manière suivante :
(i) on forme un pied de cuve initial comportant un silicate et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(ii) on ajoute l'agent acidifiant audit pied de cuve jusqu'à l'obtention d'une valeur du pH du milieu réactionnel d'au moins environ 7,
(iii) on ajoute au milieu réactionnel simultanément de l'agent acidifiant et un silicate,
- puis on effectue les étapes successives suivantes :
(iv) on ajoute au milieu réactionnel au moins un composé A de l'aluminium,
(v) on ajoute au milieu réactionnel un agent basique, de préférence jusqu'à l'obtention d'une valeur du pH du milieu réactionnel comprise entre 6,5 et 10, en particulier entre 7,2 et 8,6,
(vi) on ajoute au milieu réactionnel de l'agent acidifiant, de préférence jusqu'à l'obtention d'une valeur du pH du milieu réactionnel comprise entre 3 et 5, en particulier entre 3,4 et 4,5,
- la séparation comporte une filtration et un délitage du gâteau issu de la filtration, le délitage étant effectué en présence d'au moins un composé B de l'aluminium,
- on sèche une suspension présentant un taux de matière sèche d'au plus 24 % en poids.

3. Composition de caoutchouc vulcanisable au soufre destinée à la fabrication d'enveloppes de pneumatiques, à base d'au moins un polymère dinénique, caractérisée en ce qu'elle renferme à titre de charge renforçante une silice précipitée renfermant:
- une teneur en aluminium ≥ 0,35 % et ≤ 3 % en poids par rapport au poids de la silice dans la maille de ses couches périphériques et/ou fixées à la surface de la silice,
- une surface spécifique CTAB comprise entre 140 et 200 m²/g,
- une surface spécifique BET comprise entre 140 et 200 m²/g,
- une prise d'huile DOP inférieure à 300 ml/100 g,
- un diamètre médian (Ø₅₀), après désagglomération aux ultrasons, égal ou inférieur à 3 µm,
- un facteur de désagglomération aux ultrasons (F_{D}) supérieur à 10 ml.

4. Composition selon la revendication 3, caractérisée en ce que la teneur en aluminium de la silice est ≥ à 0,50 et ≤ à 1,50 % en poids et préférentiellement est: ≥ à 0,75 et ≤ 1,40 % en poids par rapport au poids de la silice.

5. Composition selon la revendication 4, caractérisée en ce que la silice possède un rapport surface spécifique BET/surface spécifique CTAB ≥ 1 et ≤ 1,2.

6. Composition selon l'une quelconque des revendications 1 à 5, caractérisée en ce que la valeur du rapport en poids de silice « dopée » aluminium sur agent de couplage est inférieure à la valeur du rapport en poids d'une silice ayant une teneur en aluminium comprise entre 0 % et 0,30 % en poids par rapport au poids total de silice.

7. Composition selon la revendication 6, caractérisée en ce que le rapport en poids de silice « dopée » aluminium sur agent de couplage est ≥ 4,5 et ≤ 8.

8. Composition selon la revendication 7, caractérisée en ce que le rapport en poids silice « dopée » aluminium sur agent de couplage est ≥ 5,5 et ≤ 6,7.

9. Composition selon l'une quelconque des revendications 1 à 8, caractérisée en ce que le polymère diénique est un copolymère de butadiène-styrène ou un copolymère de butadiène-styrène-isoprène.

10. Composition selon la revendication 9, caractérisée en ce que le copolymère de butadiène-styrène est un copolymère préparé en solution ayant une teneur en styrène comprise entre 25 et 30 % en poids, une teneur en liaisons vinyliques de la partie butadiénique comprise entre 55 % et 65 %, une teneur en liaisons trans-1,4 comprise entre 20 % et 25 % et une température de transition vitreuse comprise entre - 20 °C et - 80 °C.

11. Composition selon la revendication 10, caractérisée en ce qu'elle contient en outre du polybutadiène et/ou du caoutchouc naturel et/ou du polyisoprène.

12. Composition selon la revendication 11, caractérisée en ce que le polybutadiène possède plus de 90 % de liaisons Cis-1,4.

13. Procédé pour améliorer les propriétés hystérétiques de compositions de caoutchoucs diéniques vulcanisables au soufre et destinées à la fabrication d'enveloppes de pneumatiques comprenant de la silice à titre de charge renforçante, caractérisé en ce qu'il consiste à renforcer lesdites compositions avec une silice précipitée hautement dispersible possédant:
- une teneur en aluminium ≥ à 0,35 % et ≤ à 3 % en poids par rapport au poids de la silice :
- une surface spécifique BET comprise entre 140 et 200 m²/g,
- une prise d'huile DOP inférieure à 300 ml/100 g,
- un diamètre médian (Ø₅₀), après désagglomération aux ultrasons, égal ou inférieur à 3 µm,
- un facteur de désagglomération aux ultrasons (F_{D}) supérieur à 10 ml, et à la mettre en oeuvre comme connu un soi.

14. Procédé pour réduire la teneur en agent de couplage de compositions de caoutchoucs diéniques vulcanisables au soufre et destinées à la fabrication d'enveloppes de pneumatiques comprenant de la silice à titre de charge renforçante, caractérisé en ce qu'il consiste à utiliser une silice précipitée hautement dispersible possédant:
- une teneur en aluminium ≥ à 0,35 % et ≤ à 3 % en poids par rapport au poids de la silice :
- une surface spécifique BET comprise entre 140 et 200 m²/g,
- une prise d'huile DOP inférieure à 300 ml/100 g,
- un diamètre médian (Ø₅₀), après désagglomération aux ultrasons, égal ou inférieur à 3 µm,
- un facteur de désagglomération aux ultrasons (F_{D}) supérieur à 10 ml,
et à la mettre en oeuvre comme connu en soi.

15. Enveloppe de pneumatique comprenant une composition de caoutchouc diénique, vulcanisable au soufre, comportant de la silice à titre de charge renforçante, caractérisée en ce que la silice est une silice précipitée hautement dispersible possédant:
- une teneur en aluminium ≥ 0,35 % et ≤ 3 % en poids par rapport au poids de la silice dans la maille de ses couches périphériques et/ou fixées à la surface de la silice,
- une surface spécifique CTAB comprise entre 140 et 200 m²/g,
- une surface spécifique BET comprise entre 140 et 200 m²/g,
- une prise d'huile DOP inférieure à 300 ml/100 g,
- un diamètre médian (Ø₅₀), après désagglomération aux ultrasons, égal ou inférieur à 3 µm,
- un facteur de désagglomération aux ultrasons (F_{D}) supérieur à 10 ml.

16. Enveloppe de pneumatique selon la revendication 15, caractérisée en ce que la bande de roulement comprend une silice précipitée possédant une teneur en aluminium ≥ 0,35 % et ≤ 3 % en poids par rapport au poids de la silice.

17. Bande de roulement de pneumatique à base d'une composition de caoutchouc diénique, vulcanisable au soufre, comportant de la silice à titre de charge renforçante, caractérisé en ce que la silice est une silice précipitée possédant:
- une teneur en aluminium ≥ 0,35 % et ≤ 3 % en poids par rapport au poids de la silice, dans la maille de ses couches périphériques et/ou fixées à la surface de la silice,
- une surface spécifique CTAB comprise entre 140 et 200 m²/g,
- une surface spécifique BET comprise entre 140 et 200 m²/g,
- une prise d'huile DOP inférieure à 300 ml/100 g,
- un diamètre médian (Ø₅₀), après désagglomération aux ultrasons, égal ou inférieur à 3 µm,
- un facteur de désagglomération aux ultrasons (F_{D}) supérieur à 10 ml.

## Claims

1. A sulphur-vulcanisable rubber composition intended for the manufacture of tyres, having a base of at least one diene polymer, characterised in that it contains as reinforcing filler a highly dispersible silica having an aluminium content ≥ 0.35% and ≤ 3% by weight relative to the weight of the silica obtained by precipitation in the following manner:
(i) an initial bottom product is formed comprising a silicate and an electrolyte, the concentration of silicate (expressed as SiO₂) in said initial bottom product being less than 100 g/l and the electrolyte concentration in said initial bottom product being less than 17 g/l,
(ii) the acidifying agent is added to said bottom product until a pH value of the reaction medium of at least about 7 is obtained,
(iii) acidifying agent and a silicate are added to the reaction medium at the same time,
and in which a suspension having a quantity of dry matter of at most 24% by weight is dried, and:
either (a) after step (iii), at least one compound A of aluminium and then a basic agent is added to the reaction medium, said separation comprising filtration and disintegration of the cake resulting from said filtration, said disintegration being effected in the presence of at least one compound B of aluminium,
or (b) after step (iii), a silicate and at least one compound A of aluminium are added simultaneously to the reaction medium, and, when said separation comprises filtration and disintegration of the cake resulting from this filtration, the disintegration is preferably effected in the presence of at least one compound B of aluminium.

2. A composition according to Claim 1, comprising the reaction of a silicate with an acidifying agent by which a suspension of precipitated silica is obtained, then the separation and drying of this suspension, in which:
- the precipitation is effected in the following manner:
(i) an initial bottom product is formed comprising a silicate and an electrolyte, the concentration of silicate (expressed as SiO₂) in said initial bottom product being less than 100 g/l and the electrolyte concentration in said initial bottom product being less than 17 g/l,
(ii) the acidifying agent is added to said bottom product until a pH value of the reaction medium of at least about 7 is obtained,
(iii) acidifying agent and a silicate are added to the reaction medium at the same time,
- then the following successive stages are effected:
(iv) at least one compound A of aluminium is added to the reaction medium,
(v) a basic agent is added to the reaction medium, preferably until a value of the pH of the reaction medium of between 6.5 and 10, and in particular between 7.2 and 8.6, is obtained,
(vi) acidifying agent is added to the reaction medium, preferably until a value of the pH of the reaction medium of between 3 and 5, and in particular between 3.4 and 4.5, is obtained,
- the separation comprising filtration and disintegration of the cake resulting from said filtration, the disintegration being effected in the presence of at least one compound B of aluminium, or
- a suspension having a quantity of dry matter of at most 24% by weight is dried.

3. A sulphur-vulcanisable rubber composition intended for the manufacture of tyres, having a base of at least one diene polymer, characterised in that it contains as reinforcing filler a precipitated silica having:
- an aluminium content ≥ 0.35% and ≤ 3% by weight relative to the weight of the silica within tne cell of its peripheral layers and/or fixed to the surface of the silica,
- a CTAB specific surface area of between 140 and 200 m²/g,
- a BET specific surface area of between 140 and 200 m²/g,
- a DOP oil absorption of less than 300 ml/100 g,
- a median diameter (Ø₅₀), after ultrasonic disagglomeration, equal to or less than 3 µm,
- an ultrasonic disagglomeration factor (F_{D}) of more than 10 ml.

4. A composition according to Claim 3, characterised in that the aluminium content of the silica is ≥ 0.50 and ≤ 1.50% by weight, and preferably is ≥ 0.75 and ≤ 1.40% by weight, relative to the weight of the silica.

5. A composition according to Claim 4, characterised in that the silica has a ratio between BET specific surface area and CTAB specific surface area of ≥ 1 and ≤ 1.2.

6. A composition according to any one of Claims 1 to 5, characterised in that the value of the ratio by weight of aluminium-"doped" silica to coupling agent is less than the value of the ratio by weight of a silica having an aluminium content of between 0% and 0.30% by weight relative to the total weight of silica.

7. A composition according to Claim 6, characterised in that the ratio by weight of aluminium-"doped" silica to coupling agent is ≥ 4.5 and < 8.

8. A composition according to Claim 7, characterised in that the ratio by weight of aluminium-"doped" silica to coupling agent is ≥ 5.5 and < 6.7.

9. A composition according to any one of Claims 1 to 8, characterised in that the diene polymer is a butadiene-styrene copolymer or a butadiene-styreneisoprene copolymer.

10. A composition according to Claim 9, characterised in that the butadiene-styrene copolymer is a copolymer prepared in solution having a styrene content of between 25 and 30% by weight, a content of vinyl bonds of the butadiene portion of between 55% and 65%, a content of trans-1,4 bonds of between 20% and 25%, and a glass transition temperature of between -20°C and -80°C.

11. A composition according to Claim 10, characterised in that it furthermore contains polybutadiene and/or natural rubber and/or polyisoprene.

12. A composition according to Claim 11, characterised in that the polybutadiene contains more than 90% of cis-1,4 bonds.

13. A method of improving the hysteresis properties of sulphur-vulcanisable diene rubber compositions which are intended for the manufacture of tyres comprising silica as reinforcing filler, characterised in that it consists in reinforcing said compositions with a highly dispersible precipitated silica having:
- an aluminium content ≥ 0.35% and ≤ 3% by weight relative to the weight of the silica,
- a BET specific surface area of between 140 and 200 m²/g,
- a DOP oil absorption of less than 300 ml/100 g,
- a median diameter (Ø₅₀), after ultrasonic disagglomeration, equal to or less than 3 µm,
- an ultrasonic disagglomeration factor (F_{D}) of more than 10 ml, and using it in the manner known per se.

14. A method of reducing the content of coupling agent in sulphur-vulcanisable diene rubber compositions intended for the manufacture of tyres comprising silica as reinforcing filler, characterised in that it consists in using a highly dispersible precipitated silica having:
- an aluminium content ≥ 0.35% and ≤ 3% by weight relative to the weight of the silica,
- a BET specific surface area of between 140 and 200 m²/g,
- a DOP oil absorption of less than 300 ml/100 g,
- a median diameter (Ø₅₀), after ultrasonic disagglomeration, equal to or less than 3 µm,
- an ultrasonic disagglomeration factor (F_{D}) of more than 10 ml,
and using it in the manner known per se.

15. A tyre comprising a sulphur-vulcanisable diene rubber composition, comprising silica as reinforcing filler, characterised in that the silica is a highly dispersible precipitated silica having:
- an aluminium content ≥ 0.35% and ≤ 3% by weight relative to the weight of the silica within the cell of its peripheral layers and/or fixed to the surface of the silica,
- a CTAB specific surface area of between 140 and 200 m²/g,
- a BET specific surface area of between 140 and 200 m²/g,
- a DOP oil absorption of less than 300 ml/100 g,
- a median diameter (Ø₅₀), after ultrasonic disagglomeration, equal to or less than 3 µm,
- an ultrasonic disagglomeration factor (F_{D}) of more than 10 ml.

16. A tyre according to Claim 15, characterised in that the tread comprises a precipitated silica having an aluminium content of ≥ 0.35% and ≤ 3% by weight, relative to the weight of the silica.

17. A tyre tread having a base of a sulphur-vulcanisable diene rubber composition comprising silica as reinforcing filler, characterised in that the silica is a precipitated silica having:
- an aluminium content ≥ 0.35% and ≤ 3% by weight relative to the weight of the silica within the cell of its peripheral layers and/or fixed to the surface of the silica,
- a CTAB specific surface area of between 140 and 200 m²/g,
- a BET specific surface area of between 140 and 200 m²/g,
- a DOP oil absorption of less than 300 ml/100 g,
- a median diameter (Ø₅₀), after ultrasonic disagglomeration, equal to or less than 3 µm,
- an ultrasonic disagglomeration factor (F_{D}) of more than 10 ml.

## Patentansprüche

1. Mit Schwefel vulkanisierbare Kautschukzusammensetzung auf der Basis mindestens eines Dienpolymers zur Herstellung von Luftreifen,
dadurch gekennzeichnet, daß
sie als verstärkenden Füllstoff hoch dispergierbare Kieselsäure enthält, die einen Aluminiumgehalt ≥ 0,35 Gew.-% und ≤ 3 Gew.-%, bezogen auf das Gewicht der Kieselsäure, aufweist und erhalten ist durch
Fällung in folgender Weise:
(i) Herstellen eines Anfangsansatzes, der ein Silicat und einen Elektrolyten enthält, wobei die Silicatkonzentration (ausgedrückt als SiO₂) im Anfangsansatz weniger als 100 g/l und die Elektrolytkonzentration im Anfangsansatz weniger als 17 g/l betragen,
(ii) Zusatz eines Ansäuerungsmittels zu dem Ansatz bis zum Erhalt eines pH-Wertes des Reaktionsgemisches von mindestens etwa 7,
(iii) gleichzeitiger Zusatz von Ansäuerungsmittel sowie eines Silicats zum Reaktionsgemisch
und
Trocknen einer Suspension, die einen Trockensubstanzgehalt von höchstens 24 Gew.-% aufweist,
wobei
entweder (a) das Reaktionsgemisch nach Schritt (iii) mit mindestens einer Aluminiumverbindung A und danach mit einem basischen Mittel versetzt wird und die Abtrennung eine Filtration und eine Zerteilung des von der Filtration herrührenden Filterkuchens umfaßt, wobei die Zerteilung in Gegenwart mindestens einer Aluminiumverbindung B vorgenommen wird,
oder (b) das Reaktionsgemisch nach Schritt (iii) gleichzeitig mit einem Silicat und mindestens einer Aluminiumverbindung A versetzt wird und, wenn die Abtrennung eine Filtration und eine Zerteilung des von der Filtration herrührenden Filterkuchens umfaßt, die Zerteilung vorzugsweise in Gegenwart mindestens einer Aluminiumverbindung B vorgenommen wird.

2. Kautschukzusammensetzung nach Anspruch 1, wobei die Kieselsäure durch Umsetzung eines Silicats mit einem Ansäuerungsmittel unter Erhalt einer Suspension von gefällter Kieselsäure und anschließende Abtrennung und Trocknen der Suspension erhalten ist,
wobei
- die Fällung in folgender Weise durchgeführt wird:
(i) Herstellen eines Anfangsansatzes, der ein Silicat und einen Elektrolyten enthält, wobei die Silicatkonzentration (ausgedrückt als SiO₂) im Anfangsansatz weniger als 100 g/l und die Elektrolytkonzentration im Anfangsansatz weniger als 17 g/l betragen,
(ii) Zusatz eines Ansäuerungsmittels zu dem Ansatz bis zum Erhalt eines pH-Wertes des Reaktionsgemisches von mindestens etwa 7,
und
(iii) gleichzeitiger Zusatz von Ansäuerungsmittel sowie eines Silicats zum Reaktionsgemisch,
- danach folgende Schritte nacheinander durchgeführt werden:
(iv) Zusatz mindestens einer Aluminiumverbindung A zum Reaktionsgemisch,
(v) Zusatz eines basischen Mittels zum Reaktionsgemisch, vorzugsweise bis zum Erhalt eines pH-Wertes des Reaktionsgemisches im Bereich von 6,5 bis 10 und insbesondere im Bereich von 7,2 bis 8,6 und
(vi) Zusatz von Ansäuerungsmittel zum Reaktionsgemisch, vorzugsweise bis zum Erhalt eines pH-Wertes des Reaktionsgemisches im Bereich von 3 bis 5 und insbesondere im Bereich von 3,4 bis 4,5,
- die Abtrennung eine Filtration und eine Zerteilung des von der Filtration herrührenden Filterkuchens umfaßt, wobei die Zerteilung in Gegenwart mindestens einer Aluminiumverbindung B vorgenommen wird,
und
- eine Suspension getrocknet wird, die einen Trockensubstanzgehalt von höchstens 24 Gew.-% aufweist.

3. Mit Schwefel vulkanisierbare Kautschukzusammensetzung auf der Basis mindestens eines Dienpolymers zur Herstellung von Luftreifen,
dadurch gekennzeichnet, daß
sie als verstärkenden Füllstoff eine gefällte Kieselsäure enthält, die folgende Eigenschaften aufweist:
- einen Aluminiumgehalt ≥0,35 Gew.-% und ≤ 3 Gew.-%, bezogen auf das Gewicht der Kieselsäure, im Inneren ihrer äußeren Schichten und/oder gebunden an der Oberfläche der Kieselsäure,
- eine spezifische CTAB-Oberfläche im Bereich von 140 bis 200 m²/g,
- eine spezifische BET-Oberfläche im Bereich von 140 bis 200 m²/g,
- eine DOP-Ölaufnahme von weniger als 300 ml/100 g,
- einen Medianwert der Teilchengröße (D₅₀) .nach Desagglomeration mit Ultraschall von höchstens 3 µm und
- einen Faktor der Desagglomeration mit Ultraschall (F_{D}) von mehr als 10 ml.

4. Kautschukzusammensetzung nach Anspruch 3,
dadurch gekennzeichnet, daß
der Aluminiumgehalt der Kieselsäure ≥ 0,50 Gew.-% und ≤ 1,50 Gew.-% und vorzugsweise ≥ 0,75 Gew.-% und ≤ 1,40 Gew.-% ist, bezogen auf das Gewicht der Kieselsäure.

5. Kautschukzusammensetzung nach Anspruch 4,
dadurch gekennzeichnet, daß
die Kieselsäure ein Verhältnis von spezifischer BET-Oberfläche zu spezifischer CTAB-Oberfläche ≥ 1 und ≤ 1,2 aufweist.

6. Kautschukzusammensetzung nach einem der Ansprüche 1 bis 5,
dadurch gekennzeichnet, daß
der Wert des Gewichtsverhältnisses von mit Aluminium 'dotierter' Kieselsäure zu Kupplungsmittel kleiner ist als der entsprechende Wert dieses Gewichtsverhältnisses bei einer Kieselsäure mit einem Aluminiumgehalt im Bereich von 0 bis 0,30 Gew.-%, bezogen auf das Gesamtgewicht der Kieselsäure.

7. Kautschukzusammensetzung nach Anspruch 6,
dadurch gekennzeichnet, daß
das Gewichtsverhältnis von mit Aluminium 'dotierter' Kieselsäure zu Kupplungsmittel ≥ 4,5 und < 8 ist.

8. Kautschukzusammensetzung nach Anspruch 7,
dadurch gekennzeichnet, daß
das Gewichtsverhältnis von mit Aluminium 'dotierter' Kieselsäure zu Kupplungsmittel ≥ 5,5 und ≤ 6,7 ist.

9. Kautschukzusammensetzung nach einem der Ansprüche 1 bis 8,
dadurch gekennzeichnet, daß
das Dienpolymer ein Butadien-Styrol-Copolymer oder ein Butadien-Styrol-Isopren-Copolymer ist.

10. Kautschukzusammensetzung nach Anspruch 9,
dadurch gekennzeichnet, daß
das Butadien-Styrol-Copolymer ein Copolymer ist, das in Lösung hergestellt ist und einen Styrolgehalt von 25 bis 30 Gew.-%, einen Gehalt an Vinylverknüpfungen im Butadienanteil von 55 bis 65 %, einen Gehalt an trans-1,4-Verknüpfungen von 20 bis 25 Gew.-% und eine Glasübergangstemperatur im Bereich von -20 bis -80 °C aufweist.

11. Kautschukzusammensetzung nach Anspruch 10,
dadurch gekennzeichnet, daß
sie ferner Polybutadien und/oder Naturkautschuk und/oder Polyisopren enthält.

12. Kautschukzusammensetzung nach Anspruch 11,
dadurch gekennzeichnet, daß
das Polybutadien mehr als 90 % cis-1,4-Verknüpfungen aufweist.

13. Verfahren zur Verbesserung der Hystereseeigenschaften von mit Schwefel vulkanisierbaren und zur Herstellung von Luftreifen vorgesehenen Dienkautschukzusammensetzungen, die Kieselsäure als verstärkenden Füllstoff enthalten,
dadurch gekennzeichnet, daß
es darin besteht, die Kautschukzusammensetzungen mit einer hoch dispergierbaren gefällten Kieselsäure zu verstärken, die folgende Eigenschaften aufweist:
- einen Aluminiumgehalt ≥ 0,35 Gew.-% und ≤ 3 Gew.-%, bezogen auf das Gewicht der Kieselsäure,
- eine spezifische BET-Oberfläche im Bereich von 140 bis 200 m²/g,
- eine DOB-Ölaufnahme von weniger als 300 ml/100 g,
- einen Medianwert der Teilchengröße (D₅₀) nach Desagglomeration mit Ultraschall von höchstens 3 µm und
- einen Faktor der Desagglomeration mit Ultraschall (F_{D}) von mehr als 10 ml,
wobei diese Kieselsäure in an sich bekannter Weise eingesetzt wird.

14. Verfahren zur Verringerung des Anteils an Kupplungsmittel bei mit Schwefel vulkanisierbaren und zur Herstellung von Luftreifen bestimmten Dienkautschukzusammensetzungen, die Kieselsäure als verstärkenden Füllstoff enthalten,
dadurch gekennzeichnet, daß
es darin besteht, eine hoch dispergierbare gefällte Kieselsäure zu verwenden, die folgende Eigenschaften aufweist:
- einen Aluminiumgehalt ≥ 0,35 Gew.-% und ≤ 3 Gew.-%, bezogen auf das Gewicht der Kieselsäure,
- eine spezifische BET-Oberfläche im Bereich von 140 bis 200 m²/g,
- eine DOB-Ölaufnahme von weniger als 300 ml/100 g,
- einen Medianwert der Teilchengröße (D₅₀) nach Desagglomeration mit Ultraschall von höchstens 3 µm und
- einen Faktor der Desagglomeration mit Ultraschall (F_{D}) von mehr als 10 ml,
wobei diese Kieselsäure in an sich bekannter Weise eingesetzt wird.

15. Luftreifen, der eine mit Schwefel vulkanisierbare Dienkautschukzusammensetzung enthält, die Kieselsäure als verstärkenden Füllstoff aufweist,
dadurch gekennzeichnet, daß
die Kieselsäure eine hoch dispergierbare gefällte Kieselsäure ist, die folgende Eigenschaften aufweist:
- einen Aluminiumgehalt ≥ 0,35 Gew.-% und ≤ 3 Gew.-%, bezogen auf das Gewicht der Kieselsäure, im Inneren ihrer äußeren Schichten und/oder gebunden an der Oberfläche der Kieselsäure,
- eine spezifische CTAB-Oberfläche im Bereich von 140 bis 200 m²/g,
- eine spezifische BET-Oberfläche im Bereich von 140 bis 200 m²/g,
- eine DOB-Ölaufnahme von weniger als 300 ml/100 g,
- einen Medianwert der Teilchengröße (D₅₀) nach Desagglomeration mit Ultraschall von höchstens 3 µm und
- einen Faktor der Desagglomeration mit Ultraschall (F_{D}) von mehr als 10 ml.

16. Luftreifen nach Anspruch 15,
dadurch gekennzeichnet, daß
der Laufstreifen eine gefällte Kieselsäure enthält, die einen Aluminiumgehalt ≥ 0,35 Gew.-% und ≤ 3 Gew.-%, bezogen auf das Gewicht der Kieselsäure, aufweist.

17. Laufstreifen von Luftreifen auf der Basis einer mit Schwefel vulkanisierbaren Dienkautschukzusammensetzung, die Kieselsäure als verstärkenden Füllstoff enthält,
dadurch gekennzeichnet, daß
die Kieselsäure eine gefällte Kieselsäure ist, die folgende Eigenschaften aufweist:
- einen Aluminiumgehalt ≥ 0,35 Gew.-% und ≤ 3 Gew.-%, bezogen auf das Gewicht der Kieselsäure, im Inneren ihrer äußeren Schichten und/oder gebunden an der Oberfläche der Kieselsäure,
- eine spezifische CTAB-Oberfläche im Bereich von 140 bis 200 m²/g,
- eine spezifische BET-Oberfläche im Bereich von 140 bis 200 m²/g,
- eine DOB-Ölaufnahme von weniger als 300 ml/100 g,
- einen Medianwert der Teilchengröße (D₅₀) nach Desagglomeration mit Ultraschall von höchstens 3 µm und
- einen Faktor der Desagglomeration mit Ultraschall (F_{D}) von mehr als 10 ml.
